# EUROPEAN PATENT APPLICATION

(11) **EP 2 573 688 A1**
(43) Date of publication of application: **27.03.2013**
(21) Application number: 11843976.9
(22) Date of filing: 13.10.2011
(51) Int. Cl.: G06F 17/30, G06F 13/00

(54) **ESTIMATION APPARATUS, ESTIMATION METHOD, AND PROGRAM**

(30) Priority: 24.11.2010 JP 2010261775; 29.09.2011 JP 2011215271
(71) Applicant: JVC Kenwood Corporation, Yokohama-shi, Kanagawa 221-0022 (JP)
(72) Inventor: YOSHIDA, Kenji, Yokohama-shi Kanagawa 221-0022 (JP); FUJII, Takeya, Yokohama-shi Kanagawa 221-0022 (JP)
(74) Representative: Wagner, Karl H.
(86) International application number: PCT/JP2011/005735
(87) International publication number: WO 2012/070182

(57) **Abstract**

A tag extracting unit 103 collects a blog including a character string and time information indicative of a time at which the character string is written via a network, extracts a tag appearing in the character string, and stores the associated blog and the extracted tag in a tag appearance database 104. A provisional broadcasting station estimating unit 106 estimates a broadcasting station that broadcasts a program mentioned in a blog based on a feature word appearing in a character string of the blog, and stores the broadcasting station as a provisional broadcasting station associated with the blog in a blog database 102. A broadcasting station determination unit 107 refers to the blog database 102 to count the number of the provisional broadcasting station of the program mentioned in the blog including the tag in the character string, and defines the broadcasting station that broadcasts the program if the number of the tag appearing in the character string of the blog stored in the tag appearance database 104 and written within a predetermined time range exceeds a predetermined threshold value.

## Description

### Field

The present invention relates to an estimating apparatus, an estimating method, and a program. More particularly, the present invention relates to a technology that uses collected feature words of a blog to estimate a broadcasting station that broadcasts a program mentioned in the blog and the program.

### Background

Since the Internet and blogs have become wide spread, it has become popular for ordinary users to broadcast real-time play-by-play of, for example, a television program on the air on their own blog sites. Particularly, a microblog that allows posting and browsing a short comment of around 140 characters from a mobile phone is easy to post on. Therefore, broadcasting play-by-play of the program has rapidly become wide spread. "A blog" in this application is defined as a comment or an article that are posted on a web site by an individual.

With such background, an invention has been made to provide program information on a television program that the user is currently watching viewable for the user. This assists in writing a blog article and a comment related to the program (see Patent Literature 1).

As a reverse approach, a method for estimating the program for which play-by-play is provided based on a content of a blog article has been considered. Estimation of a program mentioned in such a blog has been implemented as a method using closed caption streams such as "Detecting TV Program quoted in Blog by using Closed Caption Streams" (see Non Patent Literature 1). This method extracts feature words from EPG (Electric Program Guide) and closed caption streams, and then compares them with words in a blog. This method determines television station limitation and category limitation based on the comparison. This method further extracts time limitation from temporal feature words. This method scores them to estimate a program mentioned in a blog.

### Citation List

### Patent Literature

Patent Literature 1: Japanese Patent Application Laid-open 2008-124861

### Non Patent Literature

Non Patent Literature 1: Detecting TV Program quoted in Blog by using Closed Caption Streams by Takanori OIKAWA et al. <URL:http://db-event.jpn.org/deim2010/proceedings/files/D6-4.pdf> searched on 9th September 2011

On the other hand, an actual blogger (a blog writer) does not only provide play-by-play of television programs 365 days; but describes, for example, one scene of the blogger's own ordinary life and a book review, mixed with the play-by-play in one blog site. As a behavior pattern of such a blogger, adding tag names to respective mixed contents as individual labels is established. For example, contents are categorized into ordinary life, books, television and tagged with #dairy, #books, #tv. A frequently watched program is often tagged with a unique tag. Tags are mostly based on clipped words such as #rendoraA for serial drama A.

### Summary

### Technical Problem

The proposed method originally excludes programs without closed caption (which are all treated as exception in evaluation). However, a half of actual programs lack the closed caption, thus the method being impractical. In addition it has been difficult to apply the proposed method to a broadcast such as a radiobroadcast that lacks closed caption.
Further, actual closed caption are expressed in formal Japanese in accordance with a scenario and a broadcasting code of ethics. On the other hand, when a user posts words to the blog while watching television, the user tends to use informal Japanese that heavily includes clipped words, slangs, and tags. Particularly, entertainer's names, program names, and the like are likely to be expressed as clipped words, thus making it difficult to obtain satisfactory estimation accuracy. As a known technology to solve this problem, creation of a synonym dictionary between the formal Japanese and the informal Japanese such as clipped words, slangs, and the tags has been considered to improve estimation accuracy. However, maintaining the synonym dictionary with unknown words appearing daily causes high cost.
Certainly, as behavior of a blogger, tags are often added. However, the tags are not specified by a broadcasting station but are determined spontaneously and have variations in appearance frequency, thus making it difficult to relate it to program information.

It is an object of the present invention to accurately estimate a program mentioned in social media such as a blog without extracting feature words from EPG and closed caption or maintaining the synonym dictionary, or the like.

### Solution to Problem

To accomplish the above described object, an aspect of the present invention relates to an estimating apparatus. The estimating apparatus includes: a tag extracting unit configured to collect a blog via a network, the blog including a character string written by an individual to a web site and time information indicative of a time at which the character string is written, to extract a tag appearing in the character string of the blog, and to associate the blog with the extracted tag to be stored in a tag appearance database; a provisional broadcasting station estimating unit configured to estimate a broadcasting station that broadcasts a program mentioned in the blog based on a feature word appearing in the character string of the blog, and to associate the blog with the estimated broadcasting station as a provisional broadcasting station to be stored in a blog database; and a broadcasting station determination unit configured to refer to the blog database to count the number of the provisional broadcasting station of the program mentioned in the blog including the tag in the character string, and to determine the broadcasting station that broadcasts the program mentioned in the blog based on the counting result, if the number of the tag appearing in the character string of the blog stored in the tag appearance database and written within a predetermined time range exceeds a predetermined threshold value.
Another aspect of the present invention relates to an estimating method for causing a processor to execute steps, the steps includes: collecting a blog via a network, the blog including a character string written by an individual to a web site and time information indicative of a time at which the character string is written, extracting a tag appearing in the character string of the blog, and associating the blog with the extracted tag to be stored in a tag appearance database; estimating a broadcasting station that broadcasts a program mentioned in the blog based on a feature word appearing in the character string of the blog, and associating the blog with the estimated broadcasting station as a provisional broadcasting station to be stored in a blog database; and referring to the blog database to count the number of the provisional broadcasting station of the program mentioned in the blog including the tag in the character string, and determining the broadcasting station that broadcasts the program mentioned in the blog based on the counting result, if the number of the tag appearing in the character string of the blog stored in the tag appearance database and written within a predetermined time range exceeds a predetermined threshold value.

### Advantageous Effects of Invention

According to the present invention, a broadcasting station that broadcasts a program mentioned in social media such as a blog can be estimated.

### Brief Description of Drawings

FIG. 1 is a block diagram of an estimating apparatus according to an embodiment 1 of the present invention.
FIG. 2 is a flowchart according to the embodiment 1 of the present invention.
FIG. 3 is a table illustrating an exemplary blog DB data structure (before program estimation) according to the embodiment 1 of the present invention.
FIG. 4 is a table illustrating the exemplary blog DB data structure (after program estimation) according to the embodiment 1 of the present invention.
FIG. 5 is a table illustrating an exemplary tag appearance DB data structure according to the embodiment 1 of the present invention.
FIG. 6 is a table illustrating an exemplary tag program DB data structure (before program estimation) according to the embodiment 1 of the present invention.
FIG. 7 is a table illustrating the exemplary tag program DB data structure (after program estimation) according to the embodiment 1 of the present invention.
FIG. 8 is a table illustrating exemplary feature word data according to the embodiment 1 of the present invention.
FIG. 9 is a block diagram of an estimating apparatus according to an embodiment 2 of the present invention.
FIG. 10 is a flowchart according to the embodiment 2 of the present invention.

### Description of Embodiments

Embodiments of the present invention will be described in detail below with reference to the accompanying drawings.

### (Embodiment 1)

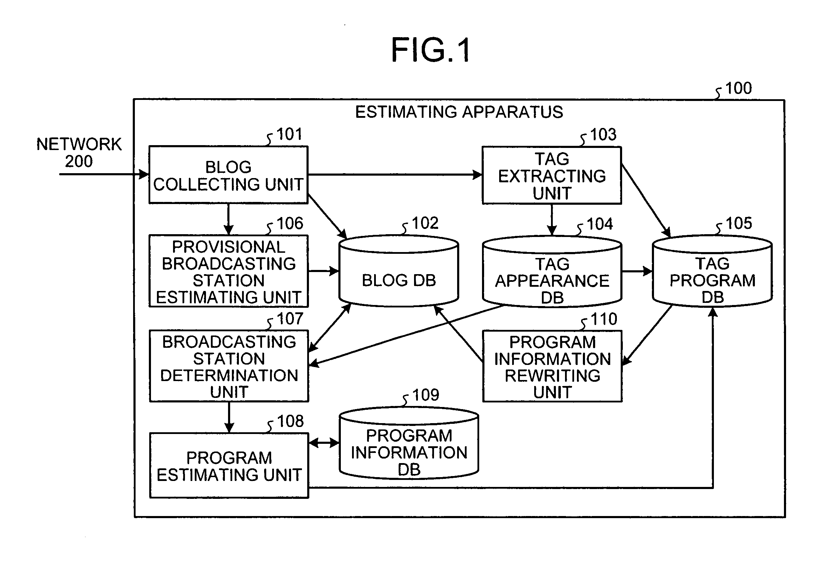

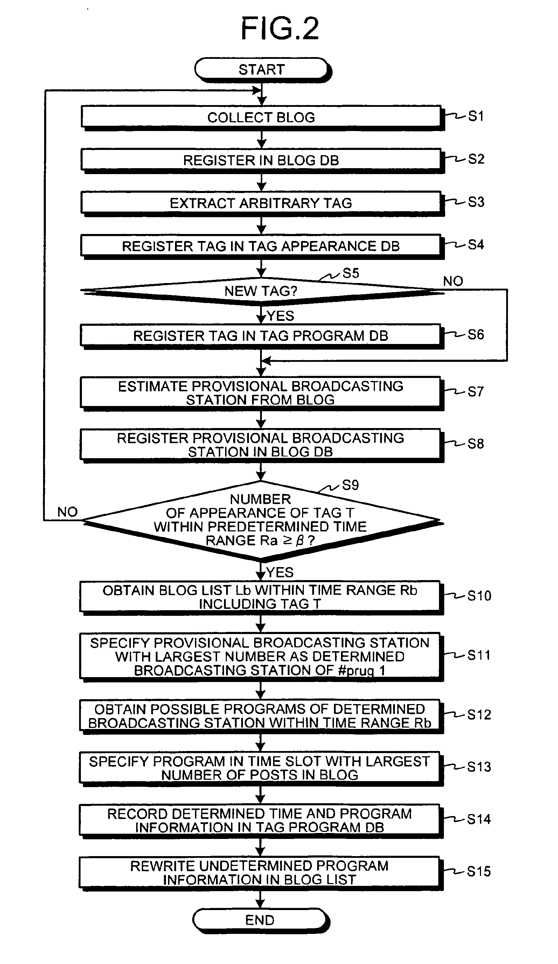

FIG. 1 is a block diagram of an estimating apparatus according to an embodiment 1 of the present invention. FIG. 2 is a flowchart according to the embodiment 1 of the present invention.

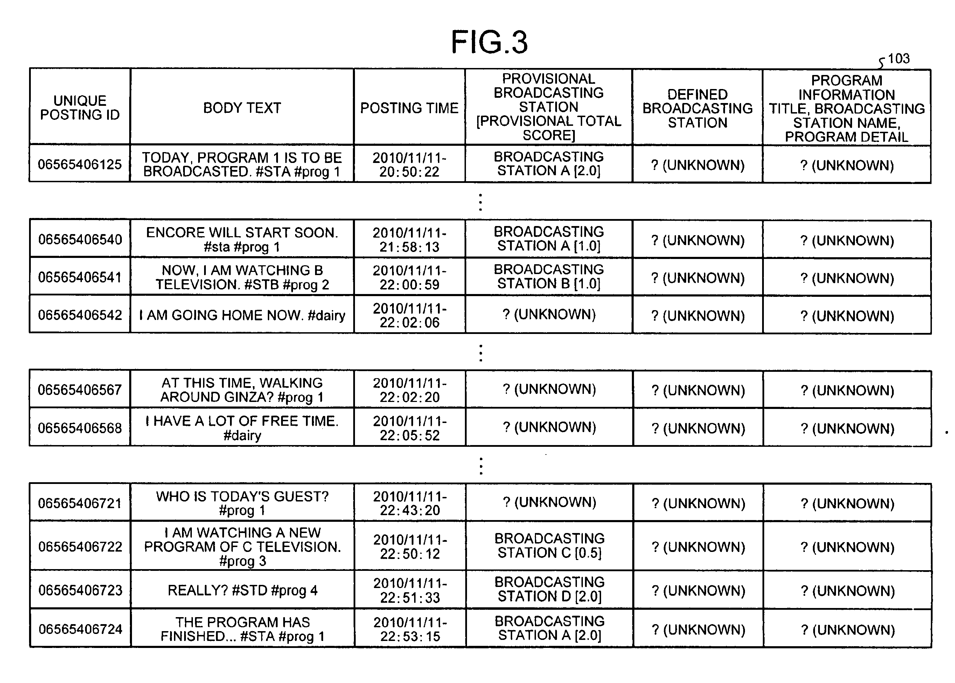

A blog collecting unit 101 of an estimating apparatus 100 collects blog articles via a network 200 such as Internet (S1). As illustrated in FIG. 3, the collecting unit 101 then registers a unique posting ID, a body text, and a posting time in a blog DB (Data Base) 102 (S2). At this point: a provisional broadcasting station, a defined broadcasting station, program information (for example, a title, a broadcasting station name, and a program detail), which will be described later, are yet to be known, therefore these are left to be blanks. "Blog" in this description is a comment and an article that are posted (written) to a web site at a time by an individual as a unit. The blog includes document information (character strings) that constitutes the posted comment and article and also includes time information of the posted comment and article.
Here, a unique posting ID is an ID (IDentification) that is unique to each of the blog articles. In the present invention, a format of the unique posting ID is not limited. The blog site to collect blog articles is not particularly limited.

Next, a tag extracting unit 103 extracts an arbitrary tag from a body text of a blog (S3). In the present embodiment, an alphameric character beginning with "#" such as #rendoraA is extracted as a tag. The present invention does not limit a tag format. Any format is possible insofar as it is a unique blog format (for example, a text defined with a specific format in HTML tags) that can be automatically obtained in accordance with a preliminarily determined rule or a format in accordance with a user's behavior pattern.

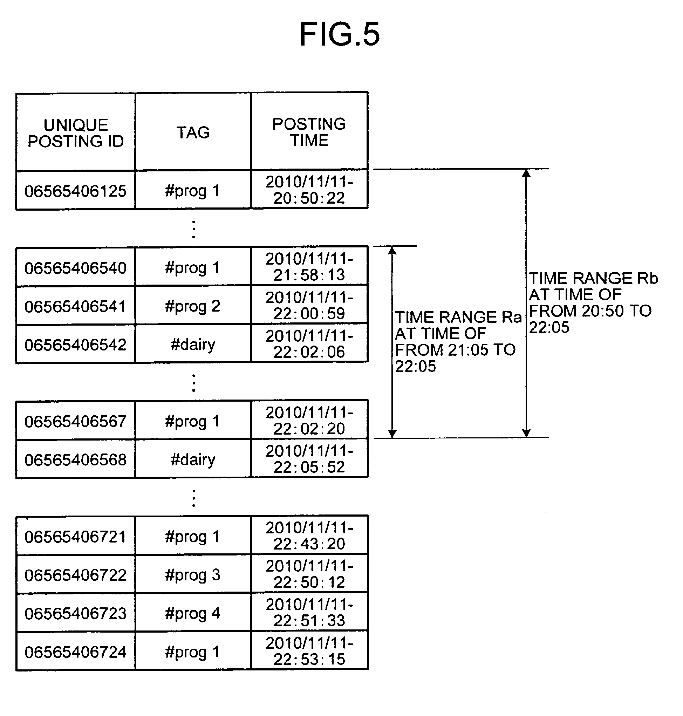

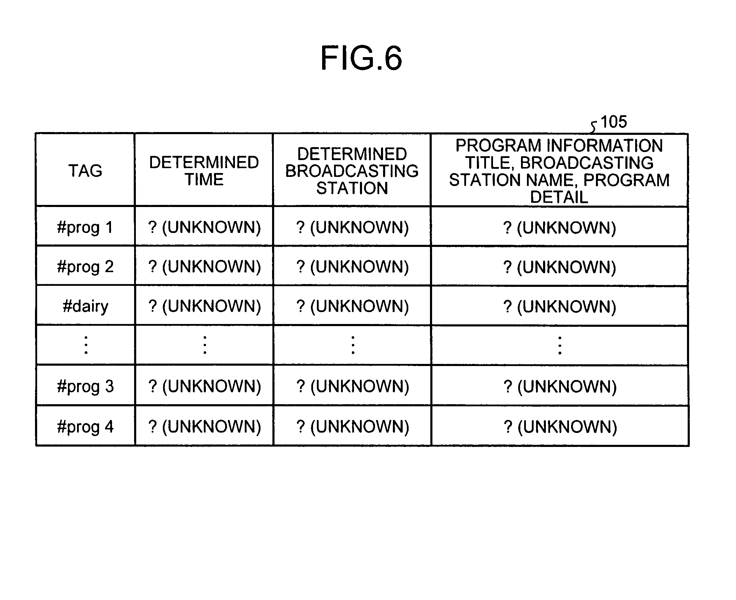

Subsequently, the tag extracting unit 103 associates the extracted tag with a unique posting ID and a posting time of the blog, and then registers the tags in a tag appearance DB 104 (S4). The tag appearance DB 104 has a data structure illustrated in FIG. 5. In FIG. 5, an illustrated example excludes feature word data that is used for estimating a provisional broadcasting station name, which will be described later.
Further, the tag extracting unit 103 judges whether the extracted tag is a new tag that has not been registered yet in a tag program DB 105 (S5). The tag program DB 105 includes tags and program information estimated from the tag that are associated with each other. If the extracted tag is a new tag, the tag extracting unit 103 registers the tag in the tag program DB 105 (S6). The tag program DB 105 has a data structure illustrated in FIG. 6. At this point, a defined time (a time when the association of the tag and program information is determined), program information, and a defined broadcasting station, which will be described later, are yet to be known, therefore these are left to be blanks.

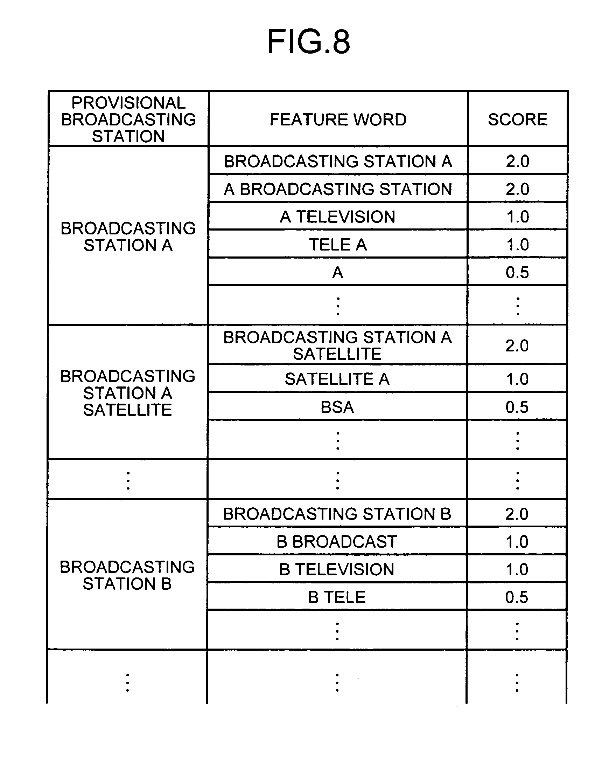

On the other hand, a provisional broadcasting station estimating unit 106 estimates a provisional broadcasting station from body texts of blogs collected by the blog collecting unit 101 (S7). The provisional broadcasting station estimating unit 106 temporarily stores the estimated provisional broadcasting station in the blog DB 102 (S8).
In this embodiment of the present invention, the estimation of the provisional broadcasting station uses feature word data as exemplarily illustrated in FIG. 8. The feature word data are preliminarily prepared for each broadcasting station. The feature word data includes terms in a blog body text and are not necessarily the above tag. The feature word data has a preliminarily determined priority score. For example, a unique posting ID of 06565406541 in FIG. 3 is only matched with a character string of "B television" in the blog body text. The provisional broadcasting station estimating unit 106 then estimates "a broadcasting station B" as the provisional broadcasting station. This method eliminates the need to perform morphological analysis, which has been executed in the conventional technology, on EPG or closed caption to extract feature words. This significantly reduces the calculation cost for the estimation.
The accuracy of estimation of the provisional broadcasting station may be improved as follows. As illustrated in FIG. 8, priority is scored for each feature word data, and the priorities are temporarily held in the provisional broadcasting station of the blog DB 102. Assume that one blog body text is matched with a plurality of feature word data of the broadcasting station. For example, a blog body text of "Watch satellite broadcasting of the broadcasting station A" is matched with both of the broadcasting station A and the satellite broadcasting of the broadcasting station A. The scores may be summed with respect to each broadcasting station. The broadcasting station with the highest provisional total score may be estimated as the provisional broadcasting station. The priority scores are also preliminarily determined values, similarly to the feature words. The priority scores are static data once set for the respective broadcasting stations. The matched provisional total score is temporarily stored in a predetermined column of the blog DB 102.

In this stage, the provisional broadcasting station is merely a provisional broadcasting station. The provisional broadcasting station may be matched with a plurality of broadcasting stations, or the provisional broadcasting station may be matched with no broadcasting station and set as unknown. For example, in a unique posting ID of 06565406567 in FIG. 3, a broadcasting station cannot be estimated from a blog body text. Thus a column associated with the provisional broadcasting station is still set as "? (unknown)."

Next, as illustrated in FIG. 5, a broadcasting station determination unit 107 regularly divides the tag appearance DB 104 by a specific time range Ra (for example, between 10 minutes ago and current time), which is preliminarily determined. In the time range Ra, it is determined whether an arbitrary tag T appears equal to or more than a number of times (for example, 50 times), which is predetermined by a threshold value β (S9). If the tag T appears equal to or more than β times, a method, which will be described later, defines the broadcasting station. Here, the specific time range Ra is a broadcasting station estimating reference time range that is a reference to obtain a correspondence relation between a tag and a broadcasting station. The threshold value P is a broadcasting station determining reference value that is referenced to determine whether a tag and a broadcasting station are associated with one another.
In this embodiment, for ease of explanation, the exemplary specific time range fixed at 10 minutes is described. The time range may be variable as follows. Time is regularly monitored to extract a start time and a finish time of a program from program information on the air. When a current time is matched with the finish time, the time range Ra is then determined.

Here, at a current time of 22:05, assume that a tag T of #prog1 appears in an interval of the specific time range Ra (21:55:00 to 22:05:00) illustrated in FIG. 5 equal to or more than β times.
The broadcasting station determination unit 107 obtains a blog list Lb in a time range Rb, which is between the earliest posting time (20:50:22) and the latest posting time (22:02:20), from the blog DB 102 based on the unique posting ID recorded in the tag appearance DB 104 (S10). The earliest posting time (20:50:22) is the earliest time at which the tag of #prog1 is included. The broadcasting station determination unit 107 subsequently counts the number of appearances of the provisional broadcasting station in the blog list Lb, thus generating a ranking.
The broadcasting station determination unit 107 then specifies the provisional broadcasting station with the largest number of appearance as the defined broadcasting station indicated by #prog1 (S11).
In this embodiment, the blog DB 102 stores blogs collected by the blog collecting unit 101 in the past one week. The blogs before the past one week is assumed to be removed. For ease of explanation, the earliest posting time at which the tag T is included, is directly employed for the time range Rb. The earliest time may be limited on the same hour of the same day as the latest posting time to deal with the case where the same program is broadcasted by a local station as a date and time-shifted broadcast.

More examples will be described. For example, assume that at an interval of the time range Rb (20:50:22 to 22:05:00), there is 305 posts in total each including a tag T and counting results of respective provisional broadcasting stations are as follows.
First place: Broadcasting station A with 296 posts (a total score of 485.0)
Second place: Broadcasting station E with 6 posts (a total score of 8.5)
Third place: Broadcasting station F with 1 post (a total score of 2.0)
unknown with 2 posts (an unknown rate of 0.7%)
In this case, "Broadcasting station A" is determined as the defined broadcasting station. This method can reduce variations and errors in respective provisional broadcasting stations estimated from each of the blog articles, thus significantly improving estimation accuracy.
In this embodiment, for ease of explanation, the broadcasting station is necessarily determined. To improve accuracy more, distribution of the provisional broadcasting station may be statistically determined. In this determination, if a rejection condition is satisfied, it may be determined that the tag T does not indicate a specific broadcasting station or program information and then the tag T may not be used for estimation of the program information. Here, the rejection condition includes, for example, a case where there is little difference between the first and second places in total priority score and a case where the unknown rate is significantly large in the whole number of postings (for example, the unknown rate is equal to or more than 30%).

If the above-mentioned method has specified a defined broadcasting station, a program estimating unit 108 subsequently obtains all candidate programs of the defined broadcasting station in the time range Rb from a program information DB 109 (S12). Here, the program information DB 109 is a database that accumulates information items such as at least a broadcasting station name, a broadcast time, a title, and a program detail. The present invention does not particularly limit an obtainer for these information items. The accumulated information items may be obtained via a network, from electronic program data included in a broadcast wave, or by another method.

In the above example, as candidate programs of the broadcasting station A in the time range Rb (20:50:22 to 22:05:00), three programs of "Program 5" broadcasted from 20:45 to 21:00, "Program 6" broadcasted from 21:00 to 22:00, and "Program 1" broadcasted from 22:00 to 22:45 are obtained.
Further, when the number of postings during the respective program broadcast times is counted based on posting times in the blog list Lb, the number of postings of a specific program becomes significantly large as follows due to a user's behavior pattern that provides real-time play-by-play of the program.
Broadcasting station name: Broadcasting station A
Title: Program 5
Broadcast time: 20:45 to 21:00
The number of postings in the blog list Lb: 1 post; Broadcasting station name: Broadcasting station A
Title: Program 6
Broadcast time: 21:00 to 22:00
The number of postings in the blog list Lb: 5 posts; and Broadcasting station name: Broadcasting station A
Title: Program 1
Broadcast time: 22:00 to 22:45
The number of postings in the blog list Lb: 299 posts.
From the above result, the program estimating unit 108 estimates "Program 1," which has the largest number of postings in the blog list Lb, as the program indicated by the tag of #prog1 (S13). Here, reducing variations and errors in a blog that relates to a plurality of programs also improves estimation accuracy.

At the time when the program indicated by the tag T has been estimated, the program estimating unit 108 registers information on "Program 1" obtained from the program information DB 109 in the tag program DB 105 as the program information. The program estimating unit 108 registers a current time of 22:05 as the defined time, thus completing association between the tag T and the program information (S14).

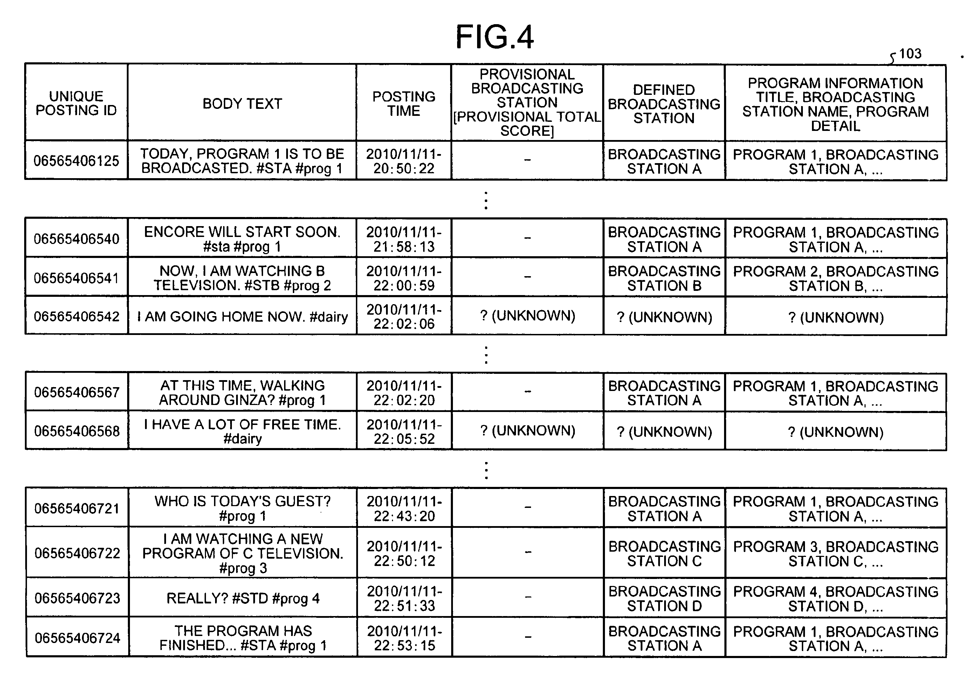

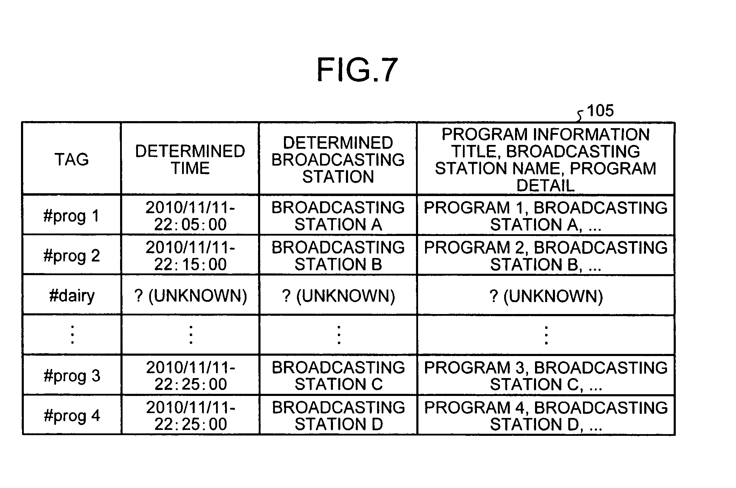

Finally, a program information rewriting unit 110 rewrites the program information and the defined broadcasting station of the blog DB 102 based on the estimated program information with respect to data with the program information left blank in the blog list Lb (S15). As a result, the unknown program information and a defined broadcasting station incorrectly estimated in the stage of S7 become correct information.
For example, although the unique posting ID of 06565406567 illustrated in FIG. 3 was not able to estimate the provisional broadcasting station from the blog body text, the above-mentioned method defines the broadcasting station as illustrated in FIG. 4. FIG. 4 and FIG. 7 show a state, similarly to the above, the program information has been defined.
On the other hand, the unique posting ID of 06565406542 in FIG. 4 includes a tag of #dairy. However, since the tag results in no association with any specific programs, it is determined that the blog does not quote a program.

As described above, according to the embodiment 1, an effect that a program mentioned in social media such as a blog can be accurately estimated without extracting feature words from EPG and closed caption and without maintaining, for example, a synonym dictionary, can be obtained.

### (Embodiment 2)

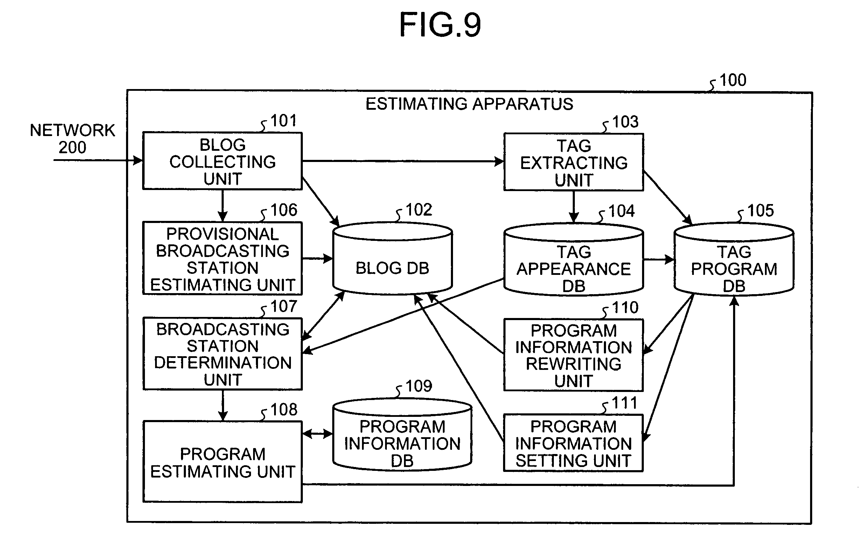

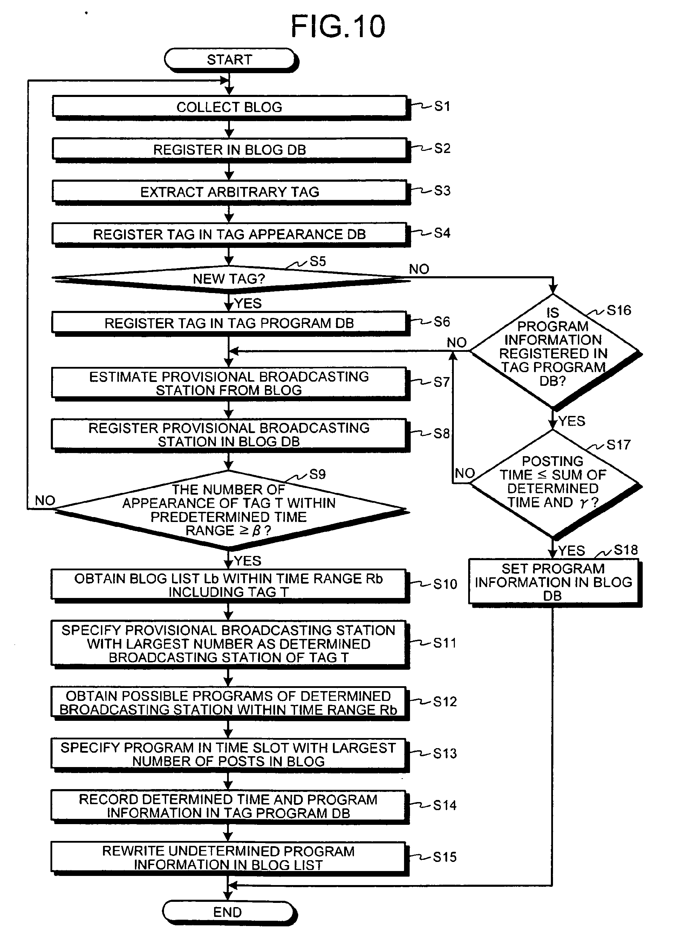

FIG. 9 is a block diagram of an estimating apparatus according to an embodiment 2 of the present invention. FIG. 10 is a flowchart according to the embodiment 2 of the present invention. The estimating apparatus according to the embodiment 2 includes a block configuration where a program information setting unit 111 is added to the estimating apparatus 100 according to the embodiment 1.

In the flowchart of FIG. 10, from step S1 to step S4, and from step S6 to step S15 are similar to corresponding steps in the embodiment 1 and explanation of such steps will be omitted.

The tag extracting unit 103 judges whether an extracted tag is a new tag that has not been registered yet in the tag program DB 105. The tag program DB 105 includes the associated tag and program information estimated from the tag (S5). If the tag is a new tag, the tag will be registered in the tag program DB 105 (S6).
If the tag has already been registered in the tag program DB 105, the program information setting unit 111 judges whether there is any program information associated with the tag (S16). If there is program information, the program information setting unit 111 judges whether a posting time in a blog is within a sum of a defined time, which is stored in the tag program DB 105, and a threshold value γ (S17). If the posting time is within the range, the tag is estimated to indicate the same program information, and then the program information and the broadcasting station list of the blog DB 102 are rewritten (S18). Here, the threshold value γ is a program estimating reference time range that is referenced to obtain a correspondence relation between a tag and program information.

For example, in the case where the predetermined threshold value γ is 2 hours, with the unique posting ID of 06565406721 illustrated in FIG. 3, a provisional broadcasting station is not obtained by matching of the blog body text and the feature word data. However, since the post includes the tag of #prog1 and the posting time of 22:43:20 is within the sum of the defined time of 22:05:00 for the tag of #prog1 and the threshold value γ of 2 hours, the program information setting unit 111 immediately estimates that the tag indicates "Program 1". As a result, the program information and the broadcasting station for the unique posting ID of 06565406721 are set as illustrated in FIG. 4.

The limitation by the sum of the defined time and the threshold value γ avoids the forcible use of program information with old association in the case where the same program is broadcasted by a different broadcasting station at a different time. For example, the same program may be broadcasted by a broadcasting station F and a broadcasting station G in a different slot. However, since names of the broadcasting stations are different, the program information does not completely match with one another. At this time, such limitation is necessary to associate the program broadcasted later with new program information. Thus, the threshold value γ may be obtained by an experiment in consideration of the program information broadcasted by each station.

Similarly to the above, by regularly checking the tag program DB 105 and removing tags with defined times being before a current time minus the threshold value γ can update an association between a tag and program information to new one.

As described above, according to the embodiment 2, an effect that a program with a blog text (that is, a blog text that is not conventionally used and deleted) that includes a tag T that relates to a program but cannot be used for estimation of a provisional broadcasting station with a known feature word table is estimated can be obtained.

The present invention has been described above based on the embodiments. The embodiments are only examples, and it is to be understood by those skilled in the art that various modifications are possible for combinations of those configurations and processes and that the modifications are within the scope of the present invention.

### (Modification 1)

In the above description, the broadcasting station determination unit 107 obtains the blog list Lb that relates to a specific tag from the blog DB 102 based on a unique posting ID recorded in the tag appearance DB 104. The broadcasting station determination unit 107 then generates a ranking by counting the number of appearances of the provisional broadcasting station from the obtained blog list Lb. The provisional broadcasting station with the largest number of appearance is determined as the defined broadcasting station indicated by the tag. The method for associating a tag with a broadcasting station by the broadcasting station determination unit 107 is not limited to a method based on the maximum value of the number of appearances. When the broadcasting station determination unit 107 obtains the defined broadcasting station, the broadcasting station determination unit 107 may not only count the number of appearances of the provisional broadcasting station that appears in the blog list Lb but also may further analyze the counting result, to obtain the defined broadcasting station. Another example of associating a tag with a broadcasting station by the broadcasting station determination unit 107 will be described below.

The broadcasting station determination unit 107 first calculates time-oriented variations in the number of each provisional broadcasting station estimated from the blog list Lb. The time-oriented variation is expressed by, for example, a graph with time on the horizontal axis and the number of the provisional broadcasting stations, which is estimated with a blog posted at each time, on the vertical axis. Subsequently, the broadcasting station determination unit 107 calculates time differential of the calculated time-oriented variation. Then, a provisional broadcasting station that has a graph with the largest local maximal value of the differential value is set as the broadcasting station associated with the tag. Accordingly, obtaining the differential value of the time-oriented variation corresponds to evaluating an instantaneous excitement in the blog. In view of this, at a starting time of a program, during broadcast of a popular section in the program, and the like, variations in excitement corresponding to progress status of the program may be used for determination of the broadcasting station.

### (Modification 2)

In the above description, the program estimating unit 108 that estimates "a program" with the largest number of postings in the blog list Lb as the program indicated by the tag has been described. A method for associating a tag and a program with each other by the program estimating unit 108 is not limited to a method based on the maximum value of the number of postings. Another example of associating a tag with a program by the program estimating unit 108 will be described below.

The program estimating unit 108 may count the number of posted programs in the blog list Lb and associate a tag and a program with each other based on the number of standardized programs for which the number of the posted program is standardized by broadcast time of a program. More specifically, the program estimating unit 108 divides the counted number of programs by a broadcast time of the program to obtain the program number per broadcast time. Generally, a program with a long broadcast time is considered to have a large number of posts in the blog compared with a program with a short broadcast time. For example, considering that a program with a broadcast time of three hours is broadcasted after a program with a broadcast time of ten minutes is broadcasted, a sum of the number of postings in the blog is considered to be larger for the program with the broadcast time of three hours. Accordingly, the program estimating unit 108 associates the tag and the program based on the program number per broadcast time to reduce a difference in the number of posts due to broadcast times and improve program estimation accuracy.

### Reference Signs List

- 100: ESTIMATING APPARATUS

- 101: BLOG COLLECTING UNIT
- 102: BLOG DB
- 103: TAG EXTRACTING UNIT
- 104: TAG APPEARANCE DB
- 105: TAG PROGRAM DB
- 106: PROVISIONAL BROADCASTING STATION ESTIMATING UNIT
- 107: BROADCASTING STATION DETERMINATION UNIT
- 108: PROGRAM ESTIMATING UNIT
- 109: PROGRAM INFORMATION DB
- 110: PROGRAM INFORMATION REWRITING UNIT
- 111: PROGRAM INFORMATION SETTING UNIT
- 200: NETWORK

### Industrial Applicability

The present invention relates to an estimating apparatus, an estimating method, and a program. More particularly, the present invention may be applied to a technology that uses collected feature words of a blog to estimate a broadcasting station that broadcasts a program mentioned in the blog and the program.

## Claims

1. An estimating apparatus comprising:
a tag extracting unit configured to collect a blog via a network, the blog including a character string written by an individual to a web site and time information indicative of a time at which the character string is written, to extract a tag appearing in the character string of the blog, and to associate the blog with the extracted tag to be stored in a tag appearance database;
a provisional broadcasting station estimating unit configured to estimate a broadcasting station that broadcasts a program mentioned in the blog based on a feature word appearing in the character string of the blog, and to associate the blog with the estimated broadcasting station as a provisional broadcasting station to be stored in a blog database; and
a broadcasting station determination unit configured to refer to the blog database to count the number of the provisional broadcasting station of the program mentioned in the blog including the tag in the character string, and to determine the broadcasting station that broadcasts the program mentioned in the blog based on the counting result, if the number of the tag appearing in the character string of the blog stored in the tag appearance database and written within a predetermined time range exceeds a predetermined threshold value.

2. The estimating apparatus according to claim 1, further comprising:
a program estimating unit configured to refer to a program information database that stores a broadcast time slot of a program broadcasted by each broadcasting station, to estimate a program indicated by the tag based on the number of the tag appearing in the character string of the blog written in the broadcast time slot of the program among programs broadcasted by the broadcasting station defined by the broadcasting station determination unit, and to associate the tag and the estimated program to be stored in a tag program database.

3. The estimating apparatus according to claim 2, further comprising:
a program information rewriting unit configured to associate the blog with the program and the broadcasting station defined by the broadcasting station determination unit to be stored in the blog database, the blog being stored in the tag appearance database and including the tag with which the program estimating unit estimates the program, among blogs written within a predetermined time range.

4. The estimating apparatus according to any one of claims 2 and 3, further comprising:
a program information setting unit configured to associate the blog with a program associated with the tag and the broadcasting station that broadcasts the program to be stored in the blog database on condition that a time at which the blog is written is within a predetermined time range of a tag if the character string of the blog collected via the network includes the tag associated with the program by the program estimating unit.

5. An estimating method for causing a processor to execute steps, the steps comprising:
collecting a blog via a network, the blog including a character string written by an individual to a web site and time information indicative of a time at which the character string is written, extracting a tag appearing in the character string of the blog, and associating the blog with the extracted tag to be stored in a tag appearance database;
estimating a broadcasting station that broadcasts a program mentioned in the blog based on a feature word appearing in the character string of the blog, and associating the blog with the estimated broadcasting station as a provisional broadcasting station to be stored in a blog database; and
referring to the blog database to count the number of the provisional broadcasting station of the program mentioned in the blog including the tag in the character string, and determining the broadcasting station that broadcasts the program mentioned in the blog based on the counting result, if the number of the tag appearing in the character string of the blog stored in the tag appearance database and written within a predetermined time range exceeds a predetermined threshold value.

6. A program for causing a computer to execute functions, the functions comprising:
collecting a blog via a network, the blog including a character string written by an individual to a web site and time information indicative of a time at which the character string is written, extracting a tag appearing in the character string of the blog, and associating the blog with the extracted tag to be stored in a tag appearance database;
estimating a broadcasting station that broadcasts a program mentioned in the blog based on a feature word appearing in the character string of the blog, and associating the blog with the estimated broadcasting station as a provisional broadcasting station to be stored in a blog database; and
referring to the blog database to count the number of the provisional broadcasting station of the program mentioned in the blog including the tag in the character string, and determining the broadcasting station that broadcasts the program mentioned in the blog based on the counting result, if the number of the tag appearing in the character string of the blog stored in the tag appearance database and written within a predetermined time range exceeds a predetermined threshold value.
